# FASCICULE DE BREVET EUROPEEN

(11) **EP 0 568 471 B1**
(45) Date de publication et mention de la délivrance du brevet: **13.11.1996**
(21) Numéro de dépôt: 93420167.4
(22) Date de dépôt: 23.04.1993
(51) Int. Cl.: H02H 3/38, H02H 7/26

(54) **Dispositif de contrôle de défaut homopolaire dans un réseau de distribution électrique**
Einrichtung zur Überwachung eines homopolaren Fehlers im Stromnetz
Device for monitoring a homopolar fault in a mains supply

(30) Priorité: 28.04.1992 FR 9205346
(43) Date de publication de la demande: 03.11.1993
(73) Titulaire: SCHNEIDER ELECTRIC SA, 92100 Boulogne-Billancourt (FR); ECOLE SUPERIEURE D'ELECTRICITE, F-91190 Gif sur Yvette (FR)
(72) Inventeur: Bastard, Pierre, Merlin Gerin, F-38050 Grenoble Cédéx 09 (FR); Meunier, Michel, Ecole Supérieure d'Electricité, F-91190 Gif sur Yvette (FR)
(74) Mandataire: Jouvray, Marie-Andrée

(56) Documents cités:
- EP-A- 0 075 348
- EP-A- 0 307 826
- EP-A- 0 316 203

## Description

L'invention concerne un dispositif de contrôle de défaut homopolaire pour réseau de distribution électrique comportant des moyens de mesure, de filtrage, d'échantillonnage et de conversion analogique/numérique de la tension résiduelle d'un réseau de distribution électrique, des moyens de mesure, de filtrage, d'échantillonnage et de conversion analogique/numérique du courant résiduel, des moyens de synchronisation de l'échantillonnage de la tension et du courant résiduel, un circuit de traitement numérique connecté aux sorties de conversion et fournissant un signal de défaut.

Les dispositifs de contrôle pour la protection contre les défauts homopolaires sont destinés à actionner des indicateurs ou à provoquer l'ouverture de la ligne sur laquelle un défaut a été détecté. Ces dispositifs peuvent se trouver sur plusieurs types de réseaux qui se différencient par le niveau de tension (basse tension, moyenne tension, haute et très haute tension) et le type de branchement du conducteur commun (neutre) à la terre, notamment: neutre isolé, neutre à la terre, neutre impédant ou neutre compensé. Un défaut homopolaire est défini par un court-circuit entre une ou plusieurs lignes actives du réseau (phases) et la terre. En règle générale, la détection d'un courant homopolaire est réalisée par la mesure d'un courant résiduel dans les phases de la ligne à contrôler. Mais cette mesure n'est pas toujours suffisante car les lignes de longueur importante présentent avec la terre des capacités de lignes qui génèrent des courants homopolaires réactifs. Il faut donc effectuer une mesure de la tension résiduelle du réseau pour permettre l'extraction de la partie active et de la partie réactive du courant homopolaire.

Les dispositifs de contrôle pour la protection contre les défauts homopolaires connus sont basés sur une détection de la puissance résiduelle active ou du courant résiduel actif. Leur mode de fonctionnement est adapté au régime permanent et ne permet pas les détections de défaut lors des régimes transitoires. Il a également été proposé certaines solutions complémentaires pour la détection de défaut en régime transitoire, utilisant l'analyse des signaux instantanés. Ce traitement est très complexe, donc coûteux.

L'invention a pour but un dispositif permettant de détecter la présence d'un défaut homopolaire dès l'apparition du régime transitoire provoqué par ce défaut. Cette détection reste naturellement effective lorsque le régime permanent de défaut s'établit.

Selon l'invention, ce but est atteint par le fait que le circuit de traitement comporte des moyens de calcul, à chaque période d'échantillonnage, des composantes fondamentales du courant et de la tension homopolaire observés sur une fenêtre de durée équivalente à la période du réseau à protéger, de manière à fournir une première grandeur représentative du déphasage entre lesdites composantes fondamentales du courant et de la tension, des premiers moyens de comparaison entre la première grandeur et un premier seuil, des moyens de détermination d'une seconde grandeur représentative de l'évolution du résultat de la première comparaison et des seconds moyens de comparaison à un second seuil prédéterminé de la seconde grandeur, et des moyens de production du signal de défaut lorsque ledit second seuil est franchi.

Selon un mode de réalisation préférentiel, les moyens de détermination de la seconde grandeur comportent des moyens de comptage.

Selon un développement de l'invention, le circuit de traitement comporte des moyens de modification du contenu des moyens de comptage, les moyens de modification comportant des moyens pour ajouter au contenu du compteur une première valeur si le résultat de la première comparaison est positif, et des moyens pour lui ajouter une seconde valeur si le résultat de la première comparaison est négatif, les première et seconde valeur étant de signes différents.

D'autres avantages et caractéristiques ressortiront plus clairement de l'exposé qui va suivre d'un mode de réalisation particulier de l'invention, donné à titre d'exemple non limitatif et représenté aux dessins annexés sur lesquels:

La figure 1 représente un réseau triphasé de distribution de l'énergie électrique auquel l'invention peut être appliquée.

La figure 2 indique le déphasage entre la tension homopolaire et les courants homopolaires parcourant un départ sain et un départ en défaut en régime permanent.

La figure 3 montre une représentation réelle des tensions et des courants dans le réseau.

La figure 4 montre en détail les variations du déphasage entre les composantes fondamentales Vo,Co,IDo de la tension homopolaire et des courants homopolaires lors de l'apparition d'un défaut.

La figure 5 représente le schéma général d'un dispositif de mesure associé à un départ L1 du réseau selon la figure 1.

La figure 6 représente un exemple d'organigramme utilisé par le circuit de traitement numérique du dispositif selon la figure 5.

Les figures 7 et 8 représentent en fonction du temps des grandeurs obtenues dans le dispositif selon la figure 5, respectivement lorsque le départ est ou n'est pas en défaut homopolaire.

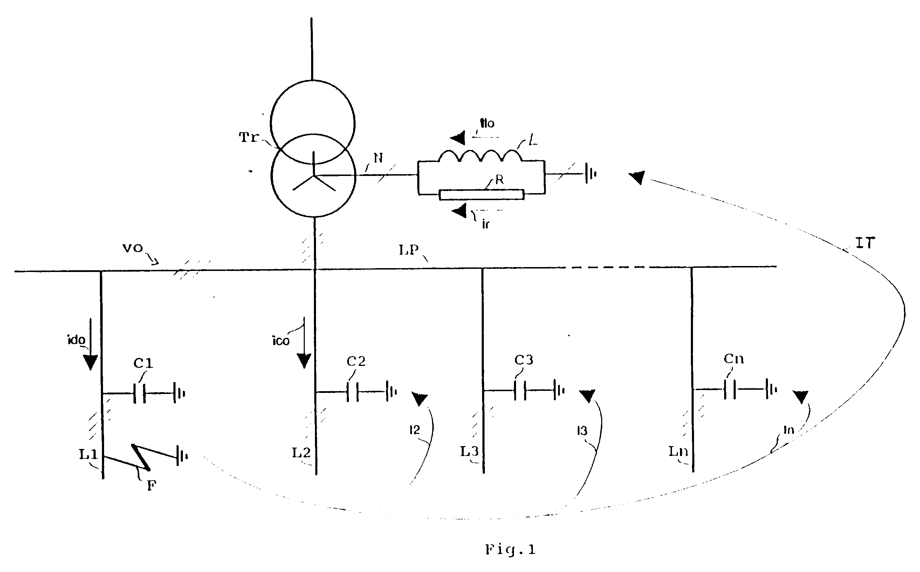

La figure 1 représente le schéma d'un réseau triphasé de distribution de l'énergie électrique dans lequel un transformateur Tr en tête de ligne alimente une ligne principale Lp, elle-même connectée à différentes lignes de distribution ou départs L1 à Ln. Le branchement du transformateur Tr est configuré en étoile au secondaire, les trois enroulements secondaires étant d'une part branchés à l'une des trois phases de la ligne principale LP et d'autre part reliés à un conducteur neutre commun N. Le conducteur neutre N est relié à la terre par l'intermédiaire d'une self de compensation L ayant une partie résistive représentée en R.

Les lignes de distribution L1 à Ln présentent avec la terre des capacités de lignes respectives C1 à Cn. De façon connue, les courants réactifs capacitifs ico générés par ces capacités de lignes sont compensés par un courant réactif inductif ilo créé par la self de compensation L. La valeur de la self est déterminée de façon à avoir LW = 1/3 CtW où L représente la valeur de la self de compensation, Ct la valeur de la somme totale des capacités de ligne et W=2πf, f étant la fréquence du réseau.

Lorsque une ligne présente un défaut F avec la terre, le départ correspondant, L1 dans le cas de la figure, est en défaut homopolaire et une tension homopolaire résiduelle vo apparait entre l'ensemble des phases de la ligne principale et la terre. La ligne L1 en défaut se comporte alors comme un générateur homopolaire. Le courant de défaut ido génère des courants réactifs I2 à In dans les départs sains, et un courant de terre IT se décomposant en un courant actif ir dans la résistance R et un courant réactif ilo dans la self L.

De façon connue, la tension homopolaire résiduelle correspond à la somme vectorielle des tensions des 3 phases par rapport à la terre et la mesure du courant homopolaire résiduel est obtenue par la somme vectorielle des courants des trois phases de la ligne.

Le passage d'un régime de fonctionnement stable ou permanent sans défaut à un autre régime stable avec défaut homopolaire où toutes les grandeurs des tensions et des courants électriques sont sinusoïdales provoque un régime transitoire avec un fonctionnement instable dont la durée dépend du défaut. Pendant ce régime transitoire la tension et le courant homopolaires ne sont plus sinusoidaux et la mesure du déphasage entre le courant et la tension pour déterminer la partie active du courant pose des difficultés de réalisation.

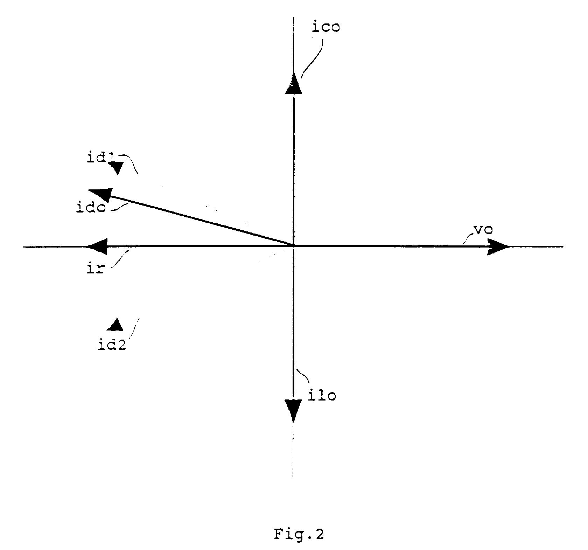

La figure 2, indique, pour un régime de fonctionnement stable ou permanent, le déphasage entre la tension homopolaire vo et, respectivement, le courant capacitif ico dans un départ sain donné, le courant selfique ilo et le courant actif ir. Suivant la précision de la compensation entre les capacités C1 à Cn et la self L, le courant dans le départ en défaut ido peut varier entre les valeurs id1 et id2 dont le déphasage par rapport à vo n'est pas exactement de 180°.

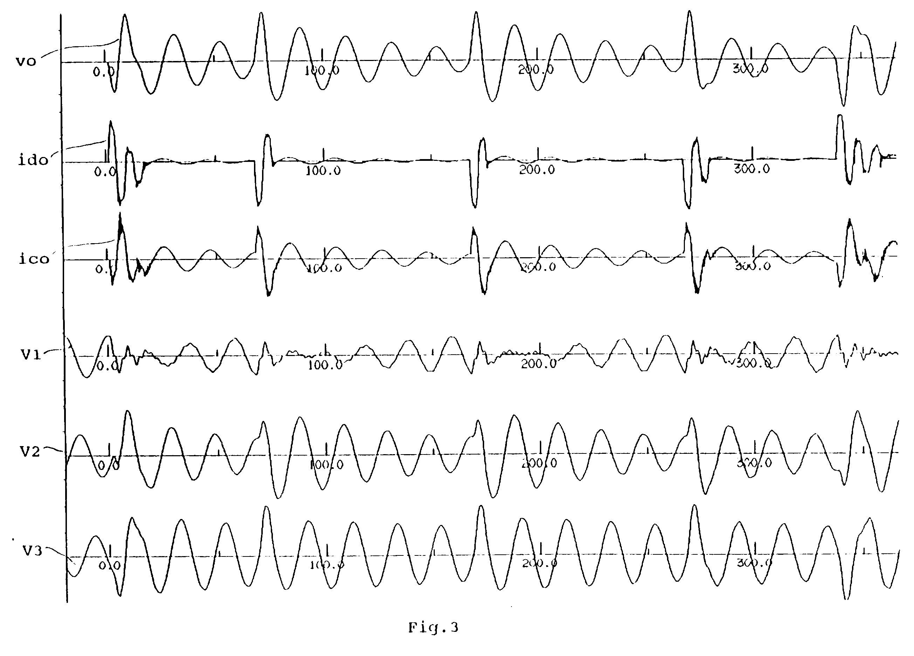

Une représentation réelle des tensions et des courants dans le réseau est montrée sur la figure 3. Les tensions des différentes phases de la ligne principale LP sont représentées en V1,V2 et V3. vo est la somme vectorielle des tensions V1,V2 et V3. En fonctionnement normal, cette tension vo est nulle. Si un défaut apparait sur au moins une phase d'une ligne de départ, la tension de la phase correspondante, par exemple V1 diminue et la tension homopolaire vo augmente. Les apparitions de défauts F visibles sur le signal de courant homopolaire ido altèrent les formes sinusoïdales des autres signaux, notamment celles de ico correspondant au courant homopolaire capacitif d'un départ sain et de la tension homopolaire vo.

Selon l'invention, la tension homopolaire vo et le courant homopolaire io sont échantillonées puis observés suivant une fenêtre de type connu (rectangulaire, Hamming, Hanning, ...). La durée de cette fenêtre d'observation est T =1/fr où fr est la fréquence fondamentale du réseau à protéger. A partir de cette observation, le calcul d'un développement en série de Fourier permet d'obtenir les composantes fondamentales Vo de la tension vo et Io du courant io homopolaires. Les composantes Vo et Io sont très dépendantes de la période T de la durée d'observation. Une grandeur représentative du déphasage Φ entre les composantes fondamentales Vo et Io est ensuite calculée. L'évolution de cette grandeur permet de détecter un défaut homopolaire.

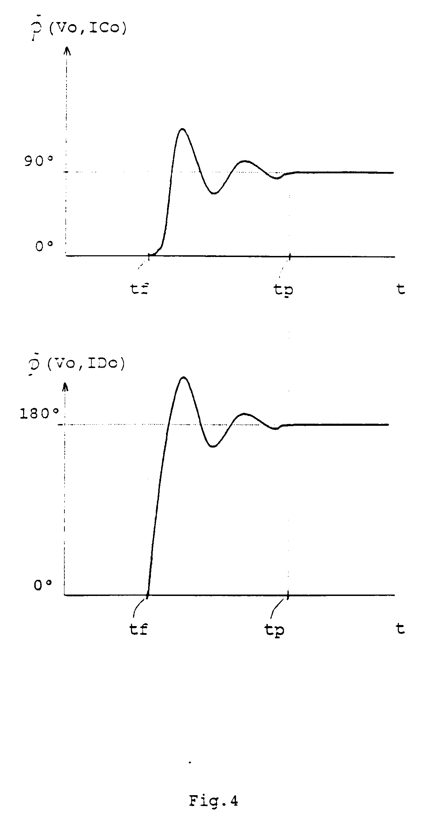

La figure 4 montre plus en détail les variations des déphasages entre la composante fondamentale Vo de la tension vo et respectivement la composante fondamentale ICo du courant d'un départ sain ico et la composante fondamentale IDo du courant d'un départ en défaut ido. A un instant tf d'apparition d'un défaut, le déphasage Φ (Vo, ICo) d'un départ sain tend vers 90° et le déphasage Φ (Vo, IDo) d'un départ en défaut tend vers 180° en subissant des oscillations.

L'analyse de ces déphasages permet de déduire que lors de l'apparition d'un défaut, le cosinus du déphasage cos Φ est positif pour un départ sain car le déphasage Φ (Vo, ICo) est toujours inférieur à 90° alors que pour un départ en défaut le signe de cos Φ prend rapidement une valeur négative, le déphasage étant proche de 180°.

Selon un mode de réalisation préféré de l'invention, la détermination du déphasage est faite à chaque période d'échantillonnage. Le calcul des composantes fondamentales du courant Io et de la tension Vo est fait par l'observation des échantillons recueillis sur une fenêtre ayant une durée équivalente à celle du réseau à contrôler. Dans un système de traitement numérique, tel que celui qui est utilisé dans le mode de réalisation particulier décrit ci-dessous, la tension vo et le courant io sont échantillonnés simultanément.

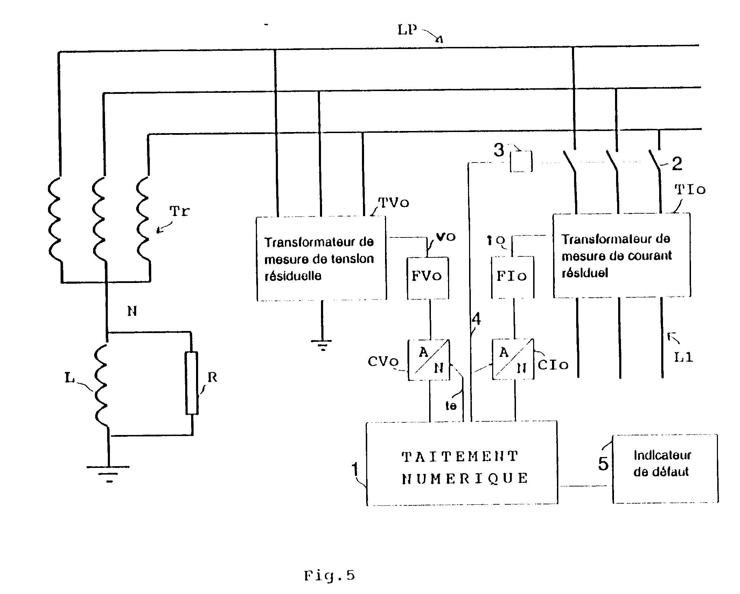

Un mode de réalisation particulier du dispositif de mesure associée au départ L1 est représenté sous forme de schéma-bloc sur la figure 5. La ligne principale LP alimente la ligne de départ L1 à travers un moyen d'interruption 2, par exemple un disjoncteur dont l'ouverture peut être contrôlée par un circuit de déclenchement 3. La mesure de la tension résiduelle vo est faite sur la ligne principale LP au moyen d'un transformateur de mesure de tension résiduelle TVo de type connu. Cette tension résiduelle vo est filtrée par un filtre anti-repliement FVo puis échantillonnée et convertie par un convertisseur analogique/numérique CVo. La mesure du courant résiduel io est faite au moyen d'un transformateur de mesure de courant résiduel TIo de type connu. Ce courant io est filtré par un filtre anti-repliement FIo puis échantillonné et converti par un convertisseur analogique/numérique CIo. Les convertisseurs CVo et CIo effectuent de façon simultanée l'échantillonnage avec une période te. Un circuit de traitement numérique 1 auquel sont appliqués les signaux de sortie des convertisseurs CVo et CIo, calcule les parties fondamentales Io et Vo du courant et de la tension homopolaires et leur déphasage. Puis, suivant des critères pré-établis définis plus en détail ci-dessous, il indique la présence d'un défaut homopolaire au moyen d'un indicateur de défaut 5 et/ou donne un ordre de déclenchement 4 au circuit de déclenchement 3 pour l'ouverture du moyen d'interruption 2. Sur la figure 5, le circuit 1 contrôle également l'échantillonnage simultané des signaux vo et io.

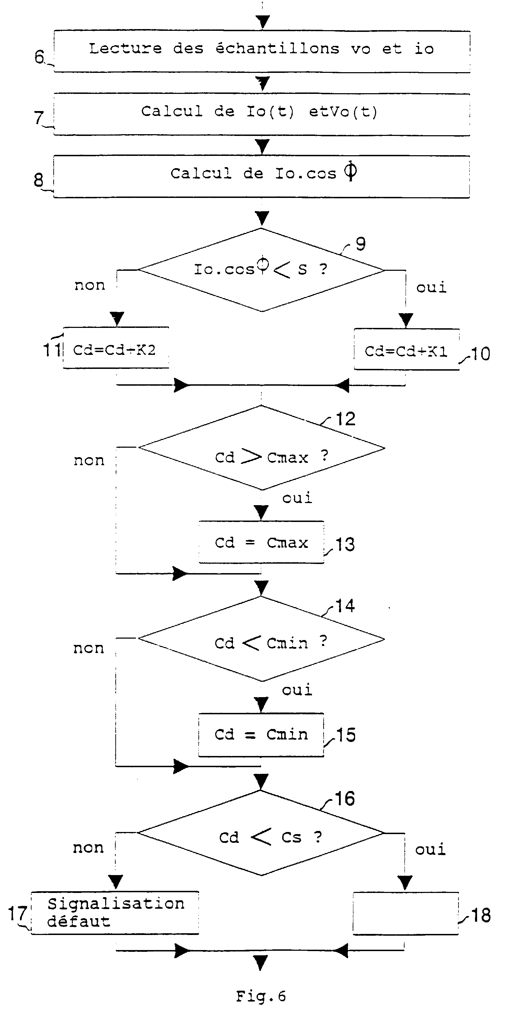

La figure 6 représente un organigramme utilisé par le circuit de traitement numérique 1. Le courant io et la tension vo homopolaires, échantillonnés avec une période d'échantillonnage te, sont lus (étape 6) par le circuit de traitement. L'extraction des composantes fondamentales Io et Vo du courant io et de la tension vo est effectuée à l'étape 7. Ces composantes sont ensuite utilisées (étape 8) pour le calcul du déphasage. Ce traitement est fait pour chaque période d'échantillonnage en tenant compte des T/te échantillons précédents correspondants à la fenêtre d'observation de période T. La valeur de Io cos φ est comparée à un seuil S=0 (étape 9) pour détecter la présence d'un défaut de courte durée. Si Io cos φ est inférieur au seuil S, le contenu du compteur de positionnement de défaut Cd est modifié d'une valeur constante K1 (étape 10). Dans le cas contraire, le contenu du compteur Cd est alors modifié d'une valeur constante K2 (étape 11). Pour que le compteur Cd reste dans une zone de visibilité, une limitation haute et une limitation basse sont prévues. A l'étape 12, le contenu du compteur Cd est comparé à une valeur maximum Cmax. Si Cd est supérieur à Cmax, le contenu du compteur est remplacé par Cmax (étape 13). A l'étape 14 le contenu du compteur Cd est comparé à une valeur minimum Cmin. Si Cd est inférieur à Cmin, le contenu du compteur est remplacé par Cmin (étape 15). Une valeur de seuil Cs, comprise entre les valeurs maximum Cmax et le minimum Cmin de Cd, permet d'indiquer l'existence d'un défaut. Le résultat de la comparaison (étape 16) entre Cd et Cs permet d'orienter le traitement vers une des étapes 17 ou 18 appropriée. La détection d'un défaut peut être utilisée pour provoquer la commande de l'indicateur de défaut 5 et éventuellement la commande de l'élément de déclenchement 3 si le défaut est présent pendant un temps prédéterminé. Si, comme dans l'exemple ci-dessous, le signe de la constante K1 est négatif et le signe de la constante K2 est positif, l'étape 17 correspond à la détection d'un défaut de longue durée.

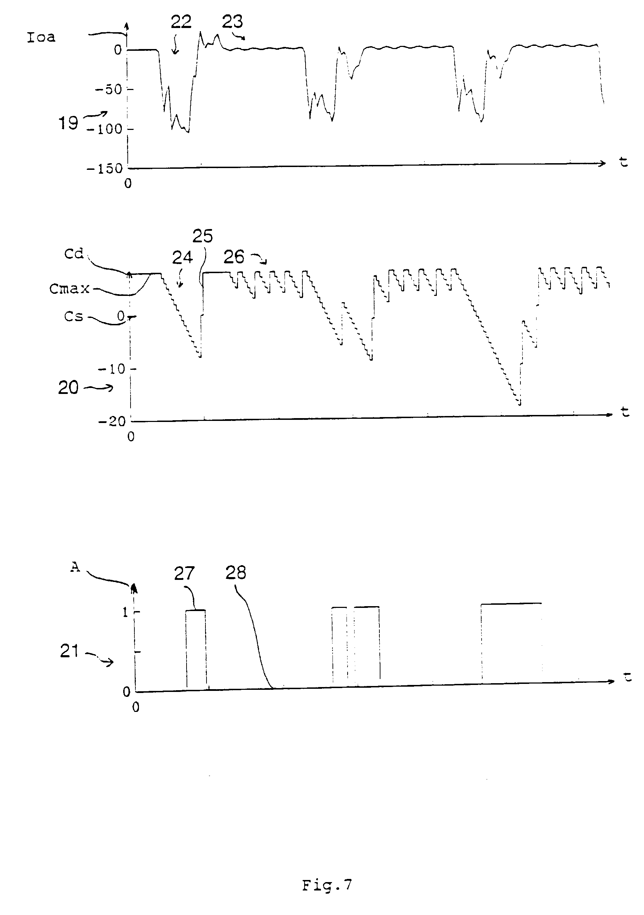

La figure 7 illustre les grandeurs obtenues dans un mode de réalisation particulier lorsque le départ considéré est en défaut homopolaire. Dans cet exemple les paramètres du compteur sont les suivants; S=0 Cmax=8, Cmin=-24, Cs=0, K1=-1 et K2=8. Lorsque le seuil S de comparaison de Io cos Φ est égal à zéro, cette comparaison peut être réduite au signe de cos Φ. La courbe 19 représente les valeurs de la partie active Ioa de la composante fondamentale Io du courant homoplaire io. La courbe 20 indique les variations de Cd en fonction du signe du courant Ioa. Un signal A représentatif du résultat de la comparaison au seuil Cs, qui dans le mode particulier de réalisation représenté sur la figure, correspond à un passage à une valeur négative du contenu du compteur, est indiqué sur la courbe 21. Ce signal prend une première valeur 27 lorsque Cd est inférieur à Cs. Sinon, il reste à une seconde valeur 28, nulle sur la figure.

La figure 7 illustre les grandeurs correspondant à un départ en défaut. Sur la courbe 19, lorsque Ioa est négatif zone 22, le contenu du compteur Cd est modifié de +K1 (Cd=Cd-1), donc diminue à chaque pas de calcul (zone 24). Si le défaut disparait Ioa redevient nul et le contenu du compteur Cd revient rapidement vers sa valeur de repos (zone 25) avec des pas équivalents à K2, soit Cd=Cd+8. Par le choix des valeurs de K1 et K2, de petites oscillations de Ioa autour de zéro (zone 23) ne permettent pas à Cd de passer au-dessous de la valeur du seuil Cs (zone 26). Lorsque Cd passe au-dessous du seuil Cs, c'est à dire lorsque Cd est négatif, le signal A prend sa première valeur 27 pendant toute la durée du dépassement.

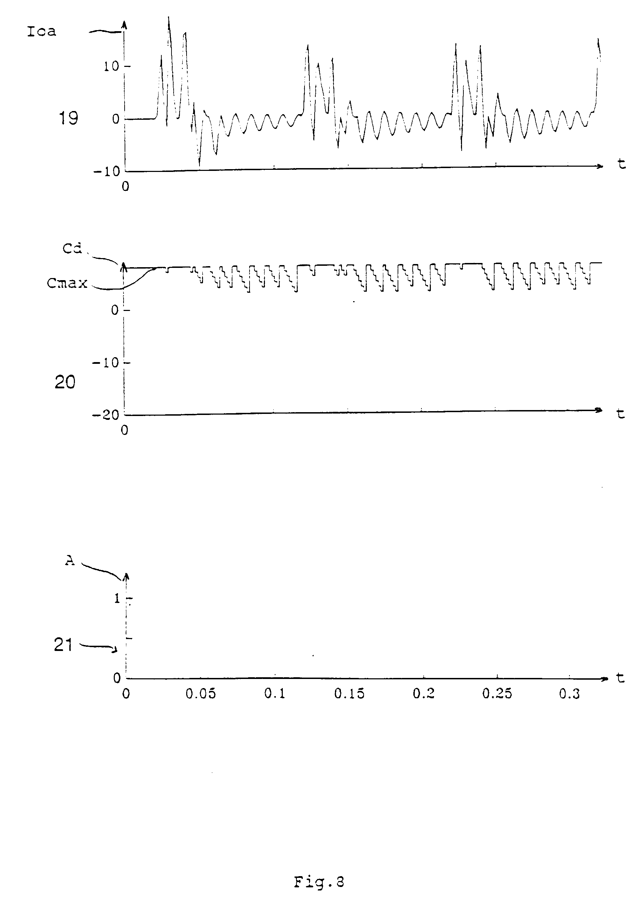

La figure 8 illustre les mêmes grandeurs que la figure 7, dans le cas où le défaut homopolaire n'est pas sur le départ considéré. Les valeurs de la composante active Ioa du courant peuvent osciller autour de 0. Les variations de Cd sont faibles et reviennent à +8 (Cdmax) à chaque passage en valeurs positives de Ioa. Le seuil Cs n'est jamais dépassé et le signal A conserve sa seconde valeur 28.

La description ci-dessus correspond au contrôle d'une ligne de départ. Elle implique que tout le système de mesure, de conversion et de traitement soit installé pour chaque ligne de départ. D'autres modes de réalisation de l'invention permettent de réduire la quantité de matériel nécessaire pour un contrôle plus généralisé du réseau. Un premier regroupement consiste à utiliser un transformateur de tension résiduelle commun connecté sur la ligne principale et donnant la mesure de la tension homopolaire à chaque dispositif de contrôle des lignes de départ. Un autre mode de réalisation permet de plus une centralisation du traitement numérique pour plusieurs départs. Dans ce cas, le traitement numérique traite tous les départs, la chaine de mesure de la tension homopolaire est unique mais les mesures des courants résiduels, ainsi que les ordres de déclenchement, sont différents pour chaque départ.

Les parties représentatives du déphasage entre les composantes fondamentales Io, Vo du courant et de la tension homopolaires peuvent se présenter sous plusieurs formes, notamment la valeur directe du déphasage Φ, le cosinus du déphasage cos Φ, la valeur de la partie active de la composante fondamentale Ioa ou la valeur de Io cos Φ. Dans chaque cas ci-dessus, le seuil de comparaison S sera adapté à la valeur à comparer.

## Revendications

1. Dispositif de contrôle de défaut homopolaire pour réseau de distribution électrique comportant des moyens de mesure (TVo), de filtrage (FVo), d'échantillonnage et de conversion analogique/numérique (CVo) de la tension résiduelle (vo) d'un réseau de distribution électrique, des moyens de mesure (TIo), de filtrage (FIo), d'échantillonnage et de conversion analogique/numérique (CIo) du courant résiduel (io), des moyens de synchronisation de l'échantillonnage de la tension (vo) et du courant (io) résiduel, un circuit de traitement numérique (1) connecté aux sorties de conversion et fournissant un signal de défaut, dispositif caractérisé en ce que le circuit de traitement (1) comporte des moyens (7) de calcul, à chaque période d'échantillonnage, des composantes fondamentales (Io,Vo) du courant et de la tension homopolaire observés sur une fenêtre de période équivalente à la période du réseau à protéger, de manière à fournir une première grandeur (Φ, cosΦ, Ioa) représentative du déphasage entre lesdites composantes fondamentales (Io,Vo) du courant et de la tension, des premiers moyens de comparaison (9) entre la première grandeur et un premier seuil (S), des moyens (10-15) de détermination d'une seconde grandeur (Cd) représentative de l'évolution du résultat de la première comparaison et des seconds moyens (16) de comparaison à un second seuil prédéterminé (Cs) de la seconde grandeur, et des moyens (17) de production du signal de défaut lorsque ledit second seuil est franchi.

2. Dispositif selon la revendication 1, caractérisé en ce que les moyens de détermination de le seconde grandeur comportent des moyens de comptage.

3. Dispositif selon la revendication 2, caractérisé en ce que le circuit de traitement (1) comporte des moyens (10,11) de modification du contenu (Cd) des moyens de comptage, les moyens de modification comportant des moyens (10) pour ajouter au contenu (Cd) du compteur une première valeur (K1) si le résultat de la première comparaison est positif, et des moyens (11) pour lui ajouter une seconde valeur (K2) si le résultat de la première comparaison est négatif, les première et seconde valeurs (K1,K2) étant de signes différents.

4. Dispositif selon l'une des revendications 2 et 3, caractérisé en ce que le circuit de traitement comporte des moyens (12 à 15) de limitation de contenu (Cd) des moyens de comptage à une valeur maximale (Cmax) et à une valeur minimale (Cmin).

5. Dispositif selon l'une quelconque des revendications 1 à 4, caractérisé en ce que, le réseau comportant une pluralité de lignes de départ (L1 à Ln) connectées à une ligne principale (LP), le dispositif comporte une pluralité de moyens de mesure, de filtrage, d'échantillonnage et de conversion analogique/numérique des courants résiduels respectivement associés à chacune des lignes de départ à contrôler, les moyens de mesure, de filtrage, d'échantillonnage et de conversion analogique/numérique de la tension résiduelle étant communs et mesurant la tension résiduelle de la ligne principale (LP), le circuit de traitement numérique (1) fournissant des signaux de défaut pour chaque ligne de départ en défaut.

## Patentansprüche

1. Einrichtung zur Erdschlußüberwachung für ein elektrisches Verteilernetz, welche Mittel zur Messung (TVo), Filterung (FVo) sowie Abtastung und Analog-Digital-Umsetzung (CVo) der Differenzspannung (vo) eines elektrischen Verteilernetzes, Mittel zur Messung (TIo), Filterung (FIo) sowie Abtastung und Anlaog-Digital-Umsetzung (CIo) des Differenzstroms (io), Mittel zur Synchronisierung der Abtastung der Differenzspannung (vo) und des Differenzstroms (io) sowie eine an die Ausgänge des Umsetzers angeschlossene, ein Fehlersignal liefernde digitale Verarbeitungsschaltung (1) umfaßt, dadurch gekennzeichnet, daß die Verarbeitungsschaltung (1) Rechenmittel (7) aufweist, um in jeder Abtastperiode die Grundschwingungen (Io, Vo) des Erdschlußstroms und der Erdschlußspannung zu berechnen, welche über einen, der Periodendauer des zu schützenden Netzes entsprechenden Zeitabschnitt erfaßt werden, und so eine erste, die Phasenverschiebung zwischen den genannten Grundschwingungen (Io, Vo) des Stroms und der Spannung abbildende Größe (Φ, cos Φ, Iao) bereitstellen, sowie erste Mittel (9) zum Vergleich der ersten Größe mit einem ersten Schwellwert (S), Mittel (10 bis 15) zur Bestimmung einer, die Veränderung des Ergebnisses des ersten Vergleichs abbildenden zweiten Größe (Cd), zweite Mittel (16) zum Vergleich der zweiten Größe mit einem festgelegten zweiten Schwellwert (Cs) und Mittel (17) zur Erzeugung des Fehlersignals bei Überschreiten des genannten zweiten Schwellwerts umfaßt.

2. Einrichtung nach Anspruch 1, dadurch gekennzeichnet, daß die Mittel zur Bestimmung der zweiten Größe Zählmittel umfassen.

3. Einrichtung nach Anspruch 2, dadurch gekennzeichnet, daß die Verarbeitungsschaltung (1) Mittel (10, 11) zur Veränderung des Inhalts (Cd) der Zählmittel umfaßt, wobei die Veränderungsmittel Mittel (10) umfassen, um den Zählerinhalt (Cd) um einen ersten Wert (K1) zu erhöhen, wenn das Ergebnis des ersten Vergleichs positiv ist, und Mittel (11) umfassen, um ihn um einen zweiten Wert (K2) zu erhöhen, wenn das Ergebnis des ersten Vergleichs negativ ist, wobei der erste und der zweite Wert (K1, K2) jeweils unterschiedliche Vorzeichen aufweisen.

4. Einrichtung nach Anspruch 2 und 3, dadurch gekennzeichnet, daß die Verarbeitungsschaltung Mittel (12 bis 15) zur Begrenzung des Inhalts (Cd) der Zählmittel auf einen Höchstwert (Cmax) und auf einen Mindestwert (Cmin) umfassen.

5. Einrichtung nach einem der Ansprüche 1 bis 4, dadurch gekennzeichnet, daß das Netz mehrere, an eine Hauptleitung angeschlossene Abgangsleitungen (L1 bis Ln) aufweist und die Einrichtung mehrere Mittel zur Messung, Filterung sowie Abtastung und Analog-Digital-Umsetzung der jeder der zu überwachenden Abgangsleitungen zugeordneten Differenzströme umfaßt, wobei die Mittel zur Messung, Filterung sowie Abtastung und Analog-Digital-Umsetzung der Differenzspannung für alle Abgänge gemeinsam ausgelegt sind und die Differenzspannung in der Hauptleitung (LP) messen, und die Verarbeitungsschaltung (1) Fehlersignale für jede fehlerbehaftete Abgangsleitung liefert.

## Claims

1. A ground fault monitoring device for an electrical power distribution system comprising means for measuring (TVo), filtering (FVo), sampling and analog-to-digital conversion (CVo) of the residual voltage (vo) of an electrical power distribution system, means for measuring (Tlo), filtering (Flo), sampling and analog-to-digital conversion (Clo) of the residual current (io), means for synchronizing sampling of the residual voltage (vo) and current (io), a numerical processing circuit (1) connected to the conversion outputs and supplying a fault signal, a device characterized in that the processing circuit (1) comprises means (7) for computing, at each sampling period, the fundamental components (lo, Vo) of the ground fault current and voltage observed on a window of a period equivalent to the period of the power system to be protected, so as to supply a first quantity (Ø, cos Ø, loa) representative of the phase difference between said fundamental components (lo, Vo) of the current and voltage, first means (9) for comparison between the first quantity and a first threshold (S), means (10-15) for determining a second quantity (Cd) representative of the variation of the result of the first comparison and second means (16) for comparison of the second quantity with a second preset threshold (Cs), and means (17) for producing the fault signal when said second threshold is exceeded.

2. The device according to claim 1, characterized in that the means for determining the second quantity comprise counting means.

3. The device according to claim 2, characterized in that the processing circuit (1) comprises means (10, 11) for modifying the content (Cd) of the counting means, the means for modifying comprising means (10) for adding a first value (K1) to the counter content (Cd) if the result of the first comparison is positive, and means (11) for adding a second value (K2) to the counter content (Cd) if the result of the first comparison is negative, the first and second values (K1, K2) being of different signs.

4. The device according to one of the claims 2 and 3, characterized in that the processing circuit comprises means (12 to 15) for limiting the content (Cd), of the counting means with a maximum value (Cmax) and a minimum value (Cmin).

5. The device according to one of the claims 1 to 4, characterized in that the power distribution system comprising a plurality of feeder lines (L1 to Ln) connected to a main line (LP), the device comprises a plurality of means for measuring, filtering, sampling and analog-to-digital conversion of the residual currents respectively associated to each of the feeder lines to be monitored, the means for measuring, filtering, sampling and analog-to-digital conversion of the residual voltage being common and measuring the residual voltage of the main line (LP), the numerical processing circuit (1) supplying fault signals for each faulty feeder line.
